# FASCICULE DE BREVET EUROPEEN

(11) **EP 0 747 285 B1**
(45) Date de publication et mention de la délivrance du brevet: **10.10.2001**
(21) Numéro de dépôt: 96450011.0
(22) Date de dépôt: 05.06.1996
(51) Int. Cl.: B64C 1/40, B32B 7/02

(54) **Panneau sandwich en matériau composite et procédé de fabrication**
Sandwichplatte aus Verbundwerkstoff und Verfahren zu seiner Herstellung
Sandwich panel using a composite material and method of making it

(30) Priorité: 09.06.1995 FR 9507101
(43) Date de publication de la demande: 11.12.1996
(73) Titulaire: EUROPEAN AERONAUTIC DEFENCE AND SPACE COMPANY - EADS FRANCE, 75016 Paris (FR)
(72) Inventeur: Saugnac, Frédéric, 31320 Auzeville-Tolosane (FR); Pelouze, Bruno, 31780 Castelginest (FR)
(74) Mandataire: Thébault, Jean-Louis

(56) Documents cités:
- WO-A-92/12854
- WO-A-95/00362
- FR-A- 2 710 874
- US-A- 3 439 774
- US-A- 4 384 020
- US-A- 4 749 150

## Description

La présente invention a pour objet un panneau sandwich en matériau composite à atténuation acoustique pour revêtement de paroi et/ou autoportant ainsi que le procédé de fabrication dudit panneau et plus particulièrement de l'une des peaux du panneau sandwich.

Dans le cas d'un fuselage d'aéronef notamment, on cherche à diminuer le bruit pour un meilleur confort de passagers et des personnels navigants qui sont soumis très régulièrement et pendant de longues périodes à une ambiance à niveau acoustique élevé, dû au moteur, aux vibrations et aux écoulements d'air.

Les fréquences sont plus particulièrement générées dans des gammes supérieures à 500 Hz plus particulièrement comprises entre 1200 et 2000 Hz et ces fréquences doivent être traitées en priorité car l'organisme des passagers y est très sensible.

Les problèmes acoustiques posés par les fuselages d'aéronefs doivent également être résolus par des panneaux adaptés mais en tenant compte de contraintes complémentaires telles que la masse, l'épaisseur, le prix, mais aussi, les contraintes esthétiques, car de tels panneaux doivent pouvoir être décorés sur la face intérieure, côté cabine.

Dans un fuselage, on peut imaginer une solution qui consiste à réaliser une coque intérieure avec des matériaux lourds pour limiter la transmission du bruit mais cette possibilité est difficilement compatible avec les critères de légèreté requis.

De plus, pour une efficacité optimale, il faut une très bonne étanchéité de la coque pour éviter les fuites autrement le traitement acoustique, au lieu de diminuer l'intensité du bruit en cabine, a tendance à l'amplifier.

Surtout on sait que l'on peut mesurer le volume total de bruit mais ce volume n'est pas obligatoirement significatif d'une gêne. Par contre, le SIL (Speech Interference Level), qui correspond à un niveau de bruit dans une gamme de fréquences données pour la parole, est un facteur très important. Il est nécessaire de le réduire et également intéressant de réduire le niveau de bruit dans les fréquences du SIL. En effet, le niveau de bruit dans certaines fréquences peut nuire à l'intelligibilité de la parole.

Une autre solution consiste à disposer sur le trajet un matériau absorbant tel qu'une mousse à cellules ouvertes, afin de diminuer le niveau acoustique provenant de la source. On sait aussi que le bruit se propage indirectement et diffuse dans la cabine si bien qu'il faut traiter aussi ce bruit indirect et surtout éviter qu'il ne s'amplifie ou qu'il ne se réverbère sur les parois.

Dans les aéronefs, à l'heure actuelle, il est prévu de tels panneaux à fort coefficient d'absorption acoustique, comprenant au moins une couche de mousse pour éviter la transmission directe de la source vers l'intérieur de la cabine.

Les contraintes décoratives et esthétiques ne sont pas les moindres car la face orientée vers l'intérieur de la cabine doit être revêtue pour donner une sensation de confort et un aspect esthétique certain.

Cette face intérieure du panneau, au contact visuel et physique des passagers, doit pouvoir être nettoyée aisément lors de l'entretien intérieur de la cabine.

De plus, il faut que le panneau soit suffisamment rigide pour qu'une personne puisse s'y appuyer, même en cas de choc, sans le briser, ce qui implique une bonne résistance mécanique.

La solution retenue pour l'invention consiste à réaliser des panneaux de revêtement à forte atténuation acoustique dont le but est d'amortir les bruits en cabine, générés par les différentes liaisons ou ponts acoustiques, sachant qu'une coque isolée, sans fuite, n'est pas facilement réalisable de façon pratique pour une cabine d'aéronef. Il faut donc un panneau qui permette de lutter contre les réverbérations, d'autant plus nombreuses que la cabine est de petites dimensions, qui soit léger, qui soit simple à fabriquer pour que le prix de revient reste dans des limites inférieures à celles des panneaux existants.

La résistance au feu est une autre contrainte à respecter pour les matériaux entrant dans la réalisation des parois de cabine d'aéronefs. Il faut donc que les composés tels que mis en oeuvre lors de la fabrication de ladite paroi respectent la norme en vigueur FAR 25 § 853 (critères de Feu/Fumée/Toxicité) applicable aux aéronefs commerciaux.

Dans des applications différentes, on trouve des documents de l'art antérieur qui proposent des panneaux rigides en matériau composite visant à atténuer les bruits.

On connaît, par la demande de brevet FR-A-2.710.874 au nom de la Demanderesse, un matériau en feuille rigide et autoportant pour l'atténuation acoustique et un panneau réalisé en un tel matériau.

Ce matériau comprend :
- une âme à structure alvéolaire, les alvéoles étant ouvertes, plus particulièrement un nid d'abeilles,
- une matière acoustiquement absorbante, emplissant les alvéoles,
- des bandes de fibres résistantes formant des ouvertures entre elles, sur chacune des faces, et
- un treillis recouvrant l'ensemble, à mailles larges.

Ce type de panneau ainsi réalisé est utilisé comme paroi de séparation transversale, notamment dans les cabines d'aéronefs. Un tel panneau permet un excellent amortissement du bruit en cabine, notamment pour des aéronefs du type à turbopropulseurs mais un tel panneau est trop lourd, trop épais et surtout moins efficace en revêtement de cloison, ladite cloison comprenant généralement déjà d'autres matériaux acoustiquement absorbants.

Le brevet US-A-3.439.774 décrit un panneau formant un carter pour un réacteur d'aéronef, destiné à absorber les bruits engendrés par le fonctionnement de ce réacteur. A cet effet, il est prévu en superposition, de l'extérieur vers l'intérieur :
- une feuille pleine formant une enveloppe,
- une première âme à structure alvéolaire, du type à croisillons,
- une première feuille de matériau métallique microperforé avec des trous de 50 à 500 µm,
- une seconde âme à structure alvéolaire, du type à croisillons, et
- une seconde feuille de matériau métallique microperforé, avec une perméabilité supérieure.

Ainsi, les bruits à haute fréquence se propageant de l'intérieur vers l'extérieur sont absorbés de façon préférentielle par la seconde feuille et les basses fréquences sont absorbées par la première feuille après traitement par passage à travers la seconde feuille.

Un tel matériau est trop épais pour être utilisé en paroi de cabine, comme revêtement. Le matériau ainsi divulgué est également trop lourd et ce type de panneau reste limité à l'application particulière envisagée, à savoir la diminution de propagation des bruits issus d'un moteur d'aéronef.

Enfin, on peut également citer la demande de brevet DE-A-3.913.255 qui décrit un panneau comprenant une succession d'une plaque comprenant des trous, une feuille de non-tissé, une âme en nid d'abeilles, une plaque munie de trous de plus petit diamètre et une couche épaisse de laine de roche.

Un tel panneau vise un amortisseur acoustique mais il est trop épais, trop lourd, trop complexe pour une application à des panneaux de revêtement intérieur de cabine d'aéronef.

Aussi, la présente invention a pour objet un panneau de revêtement et/ou autoportant, à amortissement acoustique, léger, résistant mécaniquement, suffisamment simple à fabriquer pour que son prix de revient soit compatible avec l'application aux cabines d'aéronefs, dont la résistance au feu est en adéquation avec les normes en vigueur et dont la face intérieure, côté cabine, peut être décorée.

La présente invention comprend aussi un procédé de fabrication d'un tel panneau sandwich et, plus spécifiquement, un procédé de fabrication de l'une des peaux du sandwich.

A cet effet, le panneau sandwich selon l'invention, en matériau composite, à atténuation acoustique, pour revêtement de paroi et/ou autoportant, plus particulièrement pour le doublage des cloisons ou parois de cabines d'aéronefs, comprenant une âme à structure alvéolaire ouverte, notamment en nid d'abeilles, et deux peaux disposées et solidarisées de part et d'autre de cette âme, se caractérise en ce que les deux peaux comprennent des trous et en ce que les trous de l'une des deux peaux au moins sont des micropores.

Selon une autre caractéristique, les micropores résultent d'une action physico-chimique non mécanique, le diamètre moyen des micropores ayant une section de passage de trou de l'ordre de quelques centièmes de mm².

Selon un mode de réalisation, la première peau comprend des micropores et la seconde peau est un matériau à mailles larges.

Selon un autre mode de réalisation, les deux peaux comprennent des micropores.

De plus, la ou les peaux microporeuses comprennent un pli unique d'un matériau tissé enduit d'une résine.

Pour la réalisation du panneau sandwich selon l'invention, la résine est une résine dont la polymérisation est une réaction de polycondensation, telle qu'une résine phénolique.

L'invention prévoit aussi la possibilité selon laquelle la peau destinée à être orientée côté intérieur de la cabine comprend une couche d'un matériau de décoration, notamment un tissu transparent aux sons.

Dans le cas où la face orientée vers l'intérieur de la cabine est une peau microporeuse, le matériau de décoration peut être une peinture.

L'invention a aussi pour objet un procédé de fabrication dudit panneau sandwich. Le procédé permet de réaliser le panneau en une seule opération en générant les trous simultanément à la liaison des peaux avec l'âme en matériau alvéolaire.

La présente invention est décrite, ci-après, selon un mode de réalisation particulier, non limitatif, donné à titre d'exemple, cette description se référant aux différents dessins annexés sur lesquels :
- la figure 1 représente une vue en perspective d'un mode de réalisation d'un panneau de revêtement à amortisseur acoustique,
- la figure 2 représente une vue en coupe transversale d'un panneau tel que montré sur la figure 1, mis en place dans une cabine d'aéronef,
- la figure 3 représente une première variante de la figure 1,
- la figure 4 représente une seconde variante de la figure 1,
- la figure 5 représente une vue en coupe illustrant une étape du procédé selon l'invention, et
- la figure 6 représente une vue au microscope d'une peau microporeuse selon l'invention.

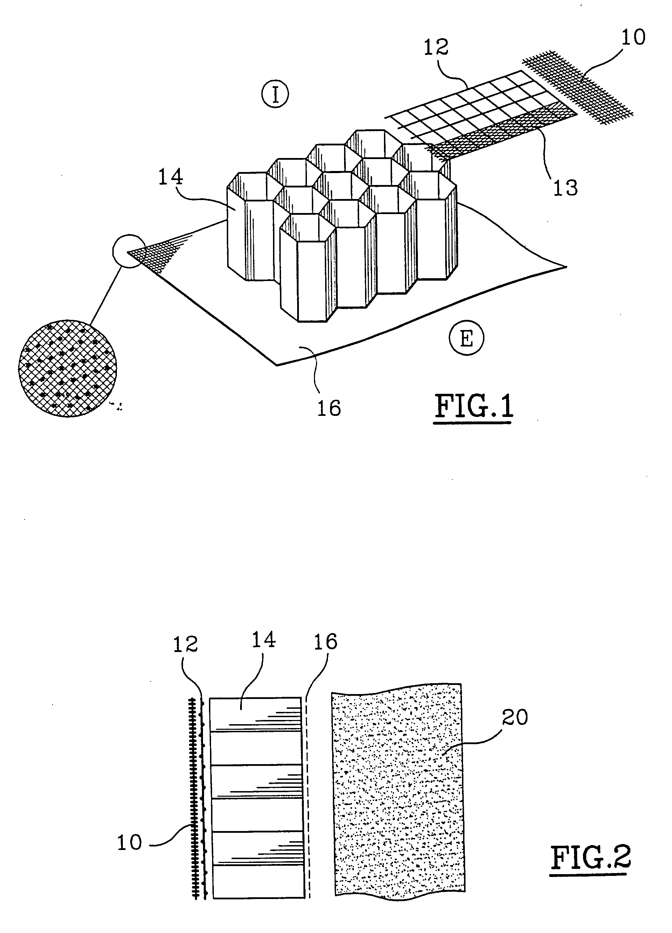

Selon le mode de réalisation de la figure 1, le panneau représenté comprend de l'intérieur I vers l'extérieur E, une couche 10 de décoration proprement dite, une première peau 12 à larges mailles, une âme 14 à structure alvéolaire ouverte et une seconde peau 16 avec des micropores.

Les résines des différentes peaux sont de type phénolique car elles présentent de nombreux avantages :
- très bonne tenue au feu,
- très faible débit calorifique, et
- faible émission de produits toxiques en cas d'inflammation.

La couche 10 de décoration comprend un tissu de décoration intervenant le moins possible au niveau des propriétés d'amortissement acoustique mais ayant pour rôle de masquer à la vue la première peau 12 à larges mailles sans modifier le spectre des fréquences des sons qui se propagent dans la cabine.

Le tissu de cette couche 10 est traité anti-salissure, en sorte qu'il se salisse le plus lentement possible et qu'il puisse être aisément nettoyé sur place.

La première peau 12 à larges mailles contribue au renforcement mécanique du panneau. Cette peau est obtenue à partir d'un tissu de verre imprégné de résine phénolique. Les caractéristiques du tissu de verre sont les suivantes :
- Masse surfacique : 278 g/m² ;
- épaisseur : 0,4 mm ;
- maille carrée de l'ordre de 1,8 mm entre les axes de fils ;

Cette première peau 12 est éventuellement complétée par des renforts 13 réalisés également à partir d'un tissu de verre imprégné de résine phénolique, disposés aux endroits adéquats déterminés par des calculs de résistance des matériaux à la portée de l'homme de l'art.

L'âme 14 est par exemple en nid d'abeilles, en papier de fibres aramides tel que celui dénommé commercialement "NOMEX"®.

La seconde peau 16 est l'élément essentiel de la combinaison, comme cela sera expliqué ultérieurement. Cette peau est obtenue à partir d'un tissu de verre enduit de résine phénolique dont les caractéristiques sont les suivantes :
- Masse surfacique : 107 g/m²
- Epaisseur : 9/100 de mm
- Armure : Satin de 4
- Nombre de fils de chaîne au cm : 24
- Nombre de fils de trame au cm : 23

Quant à l'imprégnation, elle est réalisée avec un taux massique nominal de 40 % en résine.

On sait que les résines phénoliques se polymérisent par une réaction de polycondensation qui s'accompagne d'un dégagement d'eau sous forme de vapeur à des températures supérieures à 100°C, la température de cuisson étant généralement de 150°C.

Ainsi, durant le cycle de cuisson en vue d'obtenir une polymérisation de la résine, la vapeur d'eau et les solvants volatils s'échappent.

On peut avancer une première hypothèse de formation des micropores selon laquelle les gaz, en s'échappant, laisse subsister des vides entre les mailles. Généralement, les fabricants luttent à l'encontre de tels micropores, notamment en disposant le tissu dont on cherche à obtenir l'étanchéité contre un moule ou, plus exactement, contre la face de l'outillage de mise en forme si le panneau à obtenir n'est pas plan ou en introduisant des phases de dégazage.

On peut aussi avancer une seconde hypothèse selon laquelle, lors de la polymérisation, le polymère passe tout d'abord par une phase suffisamment liquide avec un rétreint simultané entre deux mèches de fibres, ce qui a tendance à faire apparaître un trou au droit de la couche mince. Comme le tissu présente des mailles, le trou a tendance à apparaître au centre de la maille. La polymérisation bloque ensuite le polymère dans cette situation, ce qui génère les micropores recherchés.

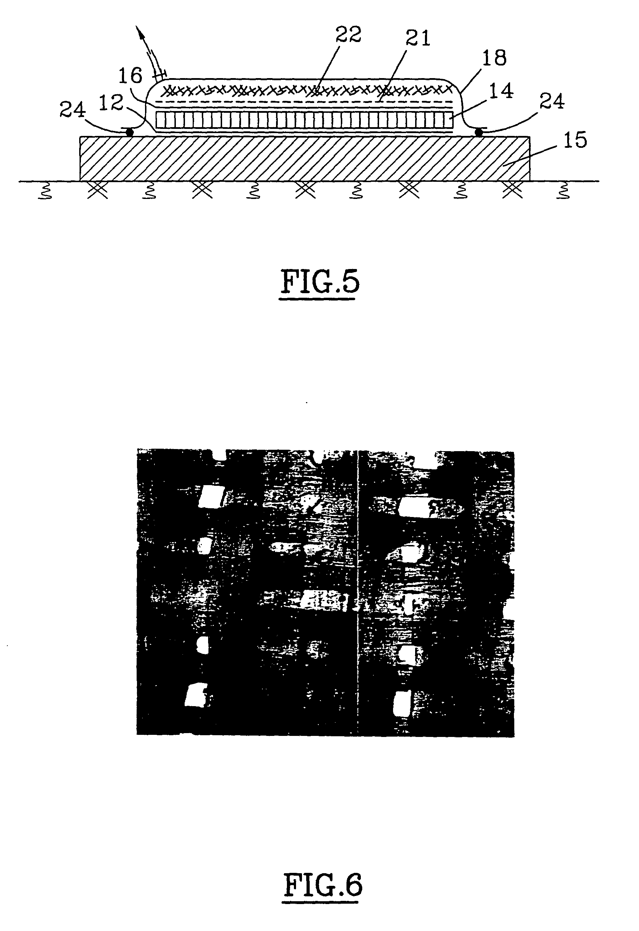

On peut se reporter à la figure 6 qui montre une vue au microscope à un grossissement de l'ordre de 60 d'une peau microporeuse ainsi obtenue.

Contrairement aux techniques de l'art antérieur qui visaient à supprimer les micropores et vainquant le préjugé qui en découle, le procédé selon l'invention comprend la succession des étapes suivantes et en se reportant à la figure 5 :
- Drapage de la première peau 12 en tissu de verre à larges mailles et des renforts éventuels 13 sur un outillage métallique 15 à la forme du panneau à obtenir (plane pour simplifier le dessin), revêtu d'un agent démoulant,
- Mise en place de l'âme 14 en nid d'abeilles sur cette première peau,
- Dépose sur l'âme en nid d'abeilles de la seconde peau 16 en tissu de verre à mailles fines,
- Mise en place des produits d'environnement, comprenant les consommables nécessaires, de type connu, notamment une couche 21 de matériau perforé anti-adhérent, par exemple en fluoroéthylène, une couche 22 de matériau drainant tel que de la ouate qui permet outre une bonne diffusion de la dépression, une absorption du surplus de résine,
- Mise en place d'une vessie 18 souple, généralement en nylon, entourant l'ensemble du sandwich et des consommables, l'étanchéité de la vessie 18 avec le moule 15 étant obtenue par des cordons 24 d'un matériau adapté, du type mastic,
- Mise en dépression de l'intérieur de la vessie 18 à un niveau de vide compris entre 5.10⁴ et 9.10⁴ Pa,
- Introduction de la vessie 18 et de l'ensemble du sandwich dans une étuve,
- Cycle de cuisson :
   . Montée à température de polymérisation,
   . Maintien à cette température de polymérisation jusqu'au degré de réticulation désiré,
   . Arrêt de la chauffe et refroidissement libre,
- Cassure du vide et remise à la pression atmosphérique lorsque la température est de préférence inférieure au T_{G} (température de transition vitreuse), et
- Démoulage de la pièce ainsi réalisée.

On constate que lors de cette polymérisation, il y a eu formation de micropores dont la géométrie, le nombre et la taille dépendent notamment des conditions de polymérisation. Ces paramètres peuvent être contrôlées et reproductibles.

Dans les conditions de cuisson suivantes :
- montée en température à une vitesse de 5°C par minute ;
- maintien à une température de 150°C pendant une durée de 1 h 30 ;
- cassure du vide lorsque la température est inférieure 40°C ;
on obtient des micropores dont la géométrie est sensiblement rectangulaire, les côtés ayant des dimensions comprises entre 0,1 et 0,3 mm (cf. figure 6).

Il est à noter que les paramètres importants à maîtriser sont :
- température maximale à atteindre pour la polymérisation,
- niveau de vide,
- température de démoulage,
- taux massique de résine,
- propriétés de la résine,
- choix de l'armure.

Quant à la couche 10 de décoration, elle est ensuite rapportée par collage sur la première peau 12 à l'aide d'un adhésif adapté, par exemple de la colle vinylique pulvérisée (4301-8 du Joint Français) de façon à ne pas perturber la résistance au feu et la transparence acoustique. On peut utiliser notamment le tissu commercialisé sous le nom AERIA T1 de la Société TEXAA.

De façon avantageuse, on peut revêtir cette première peau 12 avec une peinture préalablement au collage du tissu de décoration afin que le fond n'apparaisse pas à travers les mailles de ce tissu de décoration.

Sur la figure 2, on a représenté une vue en coupe d'un panneau de revêtement ainsi obtenu et disposé à proximité immédiate d'une cloison de cabine d'aéronef comprenant une couche 20 de matériau amortissant tel qu'une mousse à cellules ouvertes. Cette mousse a un effet amortissant pour les bruits directs se propageant des sources extérieures vers l'intérieur, à travers ladite cloison, mais aussi un rôle d'absorption pour les bruits se propageant en cabine et traités par le panneau ainsi obtenu.

En effet, les bruits se propageant dans la cabine passent à travers la couche de décoration 10, à travers la première peau 12 à mailles larges puis à travers les micropores de la seconde peau 16, pour se trouver amortis par la couche de mousse à cellules ouvertes 20. Cette mousse est indépendante du panneau et pourra être fixée par des pions adaptés sur ledit panneau.

On constate qu'un tel panneau a une faible épaisseur, une bonne résistance mécanique due à sa structure sandwich ainsi qu'une certaine aptitude à recevoir un tissu de décoration. On remarque également que le panneau est réalisé en une étape unique qui permet simultanément la fixation des deux peaux sur l'âme en nid d'abeilles et la réalisation des micropores sans autre intervention.

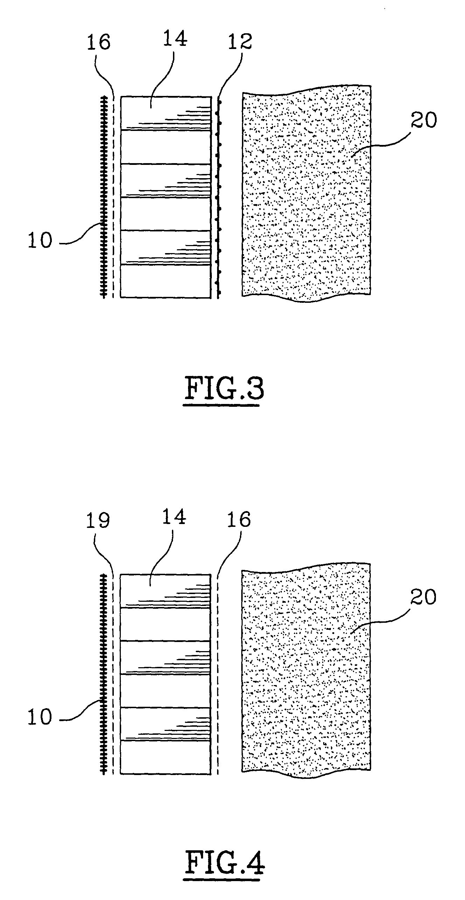

Sur la figure 3, on a représenté une première variante dans l'agencement du panneau selon l'invention. En effet, dans ce cas, le montage du panneau s'effectue en disposant la seconde peau 16 microporeuse orientée vers l'intérieur de la cabine. Les qualités d'amortissement acoustique se trouvent ainsi modifiées, car la surface du panneau côté cabine présente une surface de réverbération importante, ce qui a tendance à générer une certaine réverbération. Par contre, cette seconde peau 16 microporeuse peut recevoir directement une peinture par projection, adaptée en sorte de conserver les micropores.

Avantageusement, le revêtement pourra être moucheté car la couche de peinture doit rester de faible épaisseur et l'adhérence de la peinture reste limitée dans les parties à faible rayon de courbure.

Bien entendu, la seconde peau 16 microporeuse peut recevoir, comme dans le mode de réalisation principal, un tissu de décoration transparent aux sons.

Sur la figure 4, le panneau réalisé comprend une âme centrale avec, de part et d'autre, une peau mais la première peau 12 à mailles larges est remplacée par une peau 16 microporeuse. Le panneau ainsi obtenu est composé d'une âme centrale avec une peau microporeuse de part et d'autre de cette âme centrale.

Le procédé de réalisation est adapté en modifiant le taux massique de résine notamment afin d'obtenir une microporosité sur chacune des deux peaux.

Ce panneau peut recevoir directement une peinture comme dans la première variante de la figure 3.

On remarque que la variante de la figure 4 a des qualités de résistance mécanique supérieure à celles des panneaux des figures 2 et 3, avec l'intérêt substantiel d'un gain de masse.

Le recours à des panneaux tels que représentés sur la figure 4 sera dicté par les besoins.

On peut constater que, dans les différents modes de réalisation, les micropores sont générées notamment par la réaction de polycondensation et par les phénomènes de rétreint de la résine si bien que le panneau est obtenu directement, en une seule opération. L'assemblage des peaux avec l'âme à structure alvéolaire, opération nécessaire dans tous les cas de réalisation d'une structure sandwich, est mis à profit pour générer simultanément les micropores, sans reprise, sans aucun usinage mécanique, sans soufflage intermédiaire.

Ce procédé permet de réaliser de façon aisée, en une seule opération, un panneau sandwich qui est simple dans sa structure, léger, résistant mécaniquement, aux normes concernant le feu, la fumée et la toxicité, car les matériaux utilisés sont bien connus, peu nombreux et ont déjà fait leurs preuves pour leurs qualités en cas d'incendie.

## Revendications

1. Panneau sandwich en matériau composite, pour lutter contre les **phénomènes de réverbérations acoustiques,** pour revêtement de paroi et/ou autoportant, plus particulièrement pour le doublage des cloisons ou parois de cabines d'aéronefs **en complément à une couche en matériau acoustiquement absorbant,** ledit panneau comprenant une âme (14) à structure alvéolaire, notamment en nid d'abeilles, et deux peaux (12,16) disposées et solidarisées de part et d'autre de cette âme, **caractérisé en ce que** les deux peaux (12,16) comprennent des trous et **en ce que** les trous de l'une des deux peaux au moins sont des micropores.

2. Panneau sandwich en matériau composite à atténuation acoustique selon la revendication 1, **caractérisé en ce que** les micropores résultent d'une action physico-chimique.

3. Panneau sandwich en matériau composite à atténuation acoustique selon la revendication 1 ou 2, **caractérisé en ce qu'**il comprend une première peau (16) avec des micropores et une seconde peau (12) en un matériau à mailles larges.

4. Panneau sandwich en matériau composite à atténuation acoustique selon la revendication 1 ou 2, **caractérisé en ce qu'**il comprend une première peau (16) et une seconde peau (19) avec des micropores.

5. Panneau sandwich en matériau composite à atténuation acoustique selon l'une quelconque des revendications précédentes, **caractérisé en ce que** la ou les peaux microporeuses (16,19) comprennent un pli unique d'un matériau tissé enduit d'une résine.

6. Panneau sandwich en matériau composite à atténuation acoustique selon la revendication 5, **caractérisé en ce que** le tissu est un tissu de verre et la résine est une résine dont la polymérisation est une réaction de polycondensation, telle qu'une résine phénolique et/ou qui présente un rétreint préalable à la réticulation.

7. Panneau sandwich en matériau composite à atténuation acoustique selon l'une quelconque des revendications précédentes, **caractérisé en ce que** la peau (16, 19) destinée à être orientée côté intérieur de la cabine comprend une couche d'un matériau de décoration (10).

8. Panneau sandwich en matériau composite à atténuation acoustique selon la revendication 7, **caractérisé en ce que** le matériau de décoration (10) est un tissu transparent aux sons.

9. Panneau sandwich en matériau composite à atténuation acoustique selon la revendication 7, **caractérisé en ce que**, dans le cas où la face orientée vers l'intérieur de la cabine est une peau (19) microporeuse, le matériau de décoration (10) est une peinture.

10. Procédé de fabrication dudit panneau et plus particulièrement de la peau microporeuse du panneau sandwich selon l'une quelconque des revendications 1 à 3 et 5 à 9, **caractérisé en ce qu'**il comprend les étapes suivantes :
- Drapage de la première peau (12) en tissu à larges mailles et des renforts éventuels (13) sur un outillage métallique (15) à la forme du panneau à obtenir, revêtu d'un agent démoulant,
- Mise en place de l'âme (14) en nid d'abeilles sur cette première peau (12),
- Dépose sur l'âme en nid d'abeilles (14) de la seconde peau (16) en tissu à mailles fines,
- Mise en place des produits d'environnement, comprenant les consommables nécessaires, notamment une couche (21) de matériau perforé anti-adhérent, une couche (22) de matériau drainant qui permet, outre une bonne diffusion de la dépression, une absorption du surplus de résine,
- Mise en place d'une vessie (18) souple, entourant l'ensemble du sandwich et des consommables, l'étanchéité de la vessie (18) avec le moule (15) étant obtenue par des cordons (24) d'un matériau adapté,
- Mise en dépression de l'intérieur de la vessie (18),
- Introduction de la vessie (18) et de son contenu dans une étuve,
- Cycle de cuisson et
- Démoulage de la pièce ainsi réalisée.

11. Procédé de fabrication dudit panneau et plus particulièrement des peaux microporeuses du panneau sandwich selon la revendication 4, **caractérisé en ce qu'**il comprend les étapes suivantes :
- Drapage de la première peau (19) en tissu à mailles fines sur un outillage métallique (15) à la forme du panneau à obtenir, revêtu d'un agent démoulant,
- Mise en place de l'âme (14) en nid d'abeilles sur cette première peau (190),
- Dépose sur l'âme en nid d'abeilles (14) de la seconde peau (16) également en tissu à mailles fines,
- Mise en place des produits d'environnement, comprenant les consommables nécessaires, notamment une couche (21) de matériau perforé anti-adhérent, une couche (22) de matériau drainant qui permet, outre une bonne diffusion de la dépression, une absorption du surplus de résine,
- Mise en place d'une vessie (18) souple, entourant l'ensemble du sandwich et des consommables, l'étanchéité de la vessie (18) avec le moule (15) étant obtenue par des cordons (24) d'un matériau adapté,
- Mise en dépression de l'intérieur de la vessie (18),
- Introduction de la vessie (18) et de son contenu dans une étuve,
- Cycle de cuisson et
- Démoulage de la pièce ainsi réalisée.

12. Procédé de fabrication dudit panneau selon la revendication 10 ou 11, **caractérisé en ce que** le cycle de cuisson comprend les étapes suivantes :
- Montée à température de polymérisation,
- Maintien à cette température de polymérisation jusqu'au degré de réticulation désiré,
- Arrêt de la chauffe et refroidissement libre, et
- Cassure du vide et remise à la pression atmosphérique lorsque la température est de préférence inférieure au TG (température de transition vitreuse).

## Patentansprüche

1. Sandwichplatte aus Verbundwerkstoff zur Bekämpfung von Schallreflexionsphänomenen für Wandverkleidungen und/oder selbsttragend, insbesondere für die Aufdoppelung von Trennwänden oder Flugzeugkabinenwänden zusätzlich zu einer Schicht aus schallisolierendem Material, wobei die Platte eine Seele (14) mit Wabenstruktur, insbesondere mit Bienenwabenstruktur, und zwei Häute (12, 16), die beiderseits dieser Seele angeordnet und mit dieser verbunden sind, umfaßt, **dadurch gekennzeichnet, daß** die beiden Häute (12, 16) Löcher aufweisen und daß die Löcher wenigstens einer der zwei Häute Mikroporen sind.

2. Sandwichplatte aus Verbundmaterial mit Schalldämpfung nach Anspruch 1, **dadurch gekennzeichnet, daß** sich die Mikroporen aus einer physikalisch-chemischen Einwirkung ergeben.

3. Sandwichplatte aus Verbundmaterial mit Schalldämpfung nach Anspruch 1 oder 2, **dadurch gekennzeichnet, daß** sie eine erste Haut (16) mit Mikroporen und eine zweite Haut (12) aus einem großmaschigen Werkstoff umfaßt.

4. Sandwichplatte aus Verbundmaterial mit Schalldämpfung nach Anspruch 1 oder 2, **dadurch gekennzeichnet, daß** sie eine erste Haut (16) und eine zweite Haut (19) mit Mikroporen enthält.

5. Sandwichplatte aus Verbundmaterial mit Schalldämpfung nach einem der vorhergehenden Ansprüche, **dadurch gekennzeichnet, daß** die Haut oder Häute (16, 19) mit Mikroporen eine einzige Lage aus gewebtem Material, die mit Harz beschichtet ist, umfassen.

6. Sandwichplatte aus Verbundmaterial mit Schalldämpfung nach Anspruch 5, **dadurch gekennzeichnet, daß** das Gewebe ein Glasgewebe ist und das Harz ein Harz ist, dessen Polymerisation eine Polykondensationsreaktion ist, etwa ein Phenolharz, und/oder das vor der Vernetzung einen verminderten Querschnitt aufweist.

7. Sandwichplatte aus Verbundmaterial mit Schalldämpfung nach einem der vorhergehenden Ansprüche, **dadurch gekennzeichnet, daß** die Haut (16, 19), die dazu bestimmt ist, zur Innenseite der Kabine gerichtet zu werden, eine Schicht aus einem Ziermaterial (10) umfaßt.

8. Sandwichplatte aus Verbundmaterial mit Schalldämpfung nach Anspruch 7, **dadurch gekennzeichnet, daß** das Ziermaterial (10) ein schalldurchlässiges Gewebe ist.

9. Sandwichplatte aus Verbundmaterial mit Schalldämpfung nach Anspruch 7, **dadurch gekennzeichnet, daß** in dem Fall, in dem die in das Innere der Kabine gerichtete Fläche eine Haut (19) mit Mikroporen ist, das Ziermaterial (10) eine Farbe ist.

10. Verfahren zur Herstellung der Tafel und insbesondere der Haut mit Mikroporen der Sandwichplatte nach einem der Ansprüche 1 bis 3 und 5 bis 9, **dadurch gekennzeichnet, daß** es die folgenden Schritte umfaßt:
- Ziehen der ersten Haut (12) aus einem großmaschigen Gewebe und mit eventuellen Verstärkungen (13) auf ein metallisches Werkzeug (15) in Form der zu erhaltenden Platte, das mit einem Ablösemittel beschichtet ist,
- Anordnen der Bienenwaben-Seele (14) auf dieser ersten Haut (12),
- Aufbringen der zweiten Haut (16) aus einem feinmaschigen Gewebe auf der Bienenwaben-Seele (14),
- Anordnen von Umgebungsprodukten, die erforderliche Verbrauchsmaterialien, insbesondere eine Schicht (21) aus perforiertem Antihaftmaterial und eine Schicht (22) aus Abführungsmaterial, das außer einer guten Diffusion des Unterdrucks eine Absorption überschüssigen Harzes ermöglicht, umfassen,
- Anordnen einer elastischen Blase (18), die die Gesamtheit des Sandwich und der Verbrauchsmaterialien umgibt, wobei die Dichtheit der Blase (18) mit der Gießform (15) durch Dichtungsschnüre (24) aus einem geeigneten Material erhalten wird,
- Erzeugen eines Unterdrucks in der Blase (18),
- Einführen der Blase (18) und ihres Inhalts in einen Trockenofen,
- Aushärtungszyklus und
- Entnehmen des auf diese Weise hergestellten Teils.

11. Verfahren zur Herstellung der Tafel und insbesondere der Häute mit Mikroporen der Sandwichplatte nach Anspruch 4, **dadurch gekennzeichnet, daß** es die folgenden Schritte umfaßt:
- Ziehen der ersten Haut (19) aus einem feinmaschigen Gewebe auf ein metallisches Werkzeug (15) in Form der zu erhaltenden Tafel, die mit einem Ablösemittel beschichtet ist,
- Anordnen der Bienenwaben-Seele (14) auf dieser ersten Haut (19) ,
- Aufbringen der zweiten Haut (16), die ebenfalls aus einem feinmaschigen Gewebe besteht, auf der Bienenwaben-Seele (14),
- Anordnen der Umgebungsprodukte, die die erforderlichen Verbrauchsmaterialien, insbesondere eine Schicht (21) aus einem perforierten Antihaftmaterial und eine Schicht (22) aus einem Abführungsmaterial, das außer einer guten Diffusion des Unterdrucks eine Absorption überschüssigen Harzes ermöglicht, umfassen,
- Anordnen einer elastischen Blase (18), die die Gesamtheit des Sandwich und die Verbrauchsmaterialien umgibt, wobei die Dichtheit der Blase (18) mit der Form (15) durch Dichtungsschnüre (24) aus einem geeigneten Material erhalten wird,
- Erzeugen des Unterdrucks in der Blase (18),
- Einführen der Blase (18) und ihres Inhalts in einen Trockenofen,
- Aushärtungszyklus und
- Entnehmen des auf diese Weise hergestellten Teils.

12. Verfahren zur Herstellung der Tafel nach Anspruch 10 oder 11, **dadurch gekennzeichnet, daß** der Aushärtungszyklus die folgenden Schritte umfaßt:
- Erhöhen auf die Polymerisationstemperatur,
- Halten auf dieser Polymerisationstemperatur bis zum gewünschten Vernetzungsgrad,
- Beenden der Aufheizung und beliebige Abkühlung und
- Beenden des Vakuums und Wiederherstellen des Atmosphärendrucks, wenn die Temperatur vorzugsweise kleiner als TG (Glasübergangstemperatur) ist.

## Claims

1. Sandwich panel made from composite material, for combating acoustic reverberation phenomena, for a wall cladding and/or self-supporting, more particularly for lining partitions or walls in aircraft cabins as a supplement to a layer of acoustically absorbent material, said panel comprising a core (14) with an alveolar structure, notably in the form of a honeycomb, and two skins (12, 16) disposed and fixed on each side of this core, **characterised in that** the two skins (12, 16) comprise holes and **in that** the holes in one of the two skins at least are micropores.

2. Sandwich panel made of composite material with acoustic attenuation according to Claim 1, **characterised in that** the micropores result from a physico-chemical action.

3. Sandwich panel made from composite material with acoustic attenuation according to Claim 1 or 2, **characterised in that** it comprises a first skin (16) with micropores and a second skin (12) made from a material with wide meshes.

4. Sandwich panel made from composite material with acoustic attenuation according to Claim 1 or 2, **characterised in that** it comprises a first skin (16) and a second skin (19) with micropores.

5. Sandwich panel made from composite material with acoustic attenuation according to any one of the preceding claims, **characterised in that** the microporous skin or skins (16, 19) comprise a single ply of a woven material coated with a resin.

6. Sandwich panel made from composite material with acoustic attenuation according to Claim 5, **characterised in that** the cloth is a glass cloth and the resin is a resin whose polymerisation is a polycondensation reaction, such as a phenolic resin, and/or which exhibits contraction prior to cross-linking.

7. Sandwich panel made from composite material with acoustic attenuation according to any one of the preceding claims, **characterised in that** the skin (16, 19) intended to be oriented on the inside of the cabin comprises a layer of decoration material (10).

8. Sandwich panel made from composite material with acoustic attenuation according to Claim 7, **characterised in that** the decoration material (10) is a cloth transparent to sound.

9. Sandwich panel made from composite material with acoustic attenuation according to Claim 7, **characterised in that**, in the case where the face oriented towards the inside of the cabin is a microporous skin (19), the decoration material (10) is a paint.

10. Method of manufacturing said panel and more particularly the microporous skin of the sandwich panel according to any one of Claims 1 to 3 and 5 to 9, **characterised in that** it comprises the following steps:
- draping the first skin (12) made of cloth with large meshes and any reinforcements (13) on a metallic mould (15) to the shape of the panel to be obtained, coated with a mould-stripping agent,
- placing the honeycomb core (14) on this first skin (12),
- depositing the second skin (16) made from fine-mesh cloth on the honeycomb core (14),
- applying the surrounding products, comprising the necessary consumables, notably a layer (21) of non-stick perforated material, a layer (22) of draining material which affords, in addition to good diffusion of the negative pressure, an absorption of the surplus of resin,
- fitting a flexible bladder (18), surrounding the entire sandwich and the consumables, the seal of the bladder (18) with the mould (15) being obtained by beads (24) of a suitable material,
- putting the inside of the bladder (18) under negative pressure,
- introducing the bladder (18) and its content into an oven,
- curing cycle, and
- stripping the piece thus produced from the mould.

11. Method of manufacturing said panel and more particularly the microporous skins of the sandwich panel according to Claim 4, **characterised in that** it comprises the following steps:
- draping the first skin (19) made of cloth with fine mesh on a metallic mould (15) to the shape of the panel to be obtained, coated with a mould-stripping agent,
- placing the honeycomb core (14) on this first skin (19),
- depositing the second skin (16), also made from fine-mesh cloth, on the honeycomb core (14),
- applying the surrounding products, comprising the necessary consumables, notably a layer (21) of non-stick perforated material, a layer (22) of draining material which affords, in addition to good diffusion of the negative pressure, an absorption of the surplus of resin,
- fitting a flexible bladder (18), surrounding the entire sandwich and the consumables, the seal of the bladder (18) with the mould (15) being obtained by beads (24) of a suitable material,
- putting the inside of the bladder (18) under negative pressure,
- introducing the bladder (18) and its content into an oven,
- curing cycle, and
- stripping the piece thus produced from the mould.

12. Method of manufacturing said panel according to Claim 10 or 11, **characterised in that** the curing cycle comprises the following steps:
- raising to the polymerisation temperature,
- maintaining at this polymerisation temperature until the required degree of cross-linking,
- stopping of the heating and free cooling, and
- breaking the vacuum and returning to atmospheric pressure when the temperature is preferably below the Tg (the glass transition temperature).
